Europäisches Patentamt

European Patent Office

Office européen des brevets

(11) Publication number: **0 038 634**
**B1**

(12) **EUROPEAN PATENT SPECIFICATION**

(45) Date of publication of patent specification: **12.09.84**

(51) Int. Cl.³: **C 08 F 14/06, C 08 F 2/18**

(21) Application number: **81301394.3**

(22) Date of filing: **31.03.81**

(54) Vinyl chloride microsuspension polymerisation process.

(30) Priority: **21.04.80 GB 8013097**

(43) Date of publication of application:
**28.10.81 Bulletin 81/43**

(45) Publication of the grant of the patent:
**12.09.84 Bulletin 84/37**

(84) Designated Contracting States:
**AT BE CH DE FR GB IT LI NL SE**

(56) References cited:
**DE-A-2 125 586**
**GB-A-1 435 425**

(73) Proprietor: **IMPERIAL CHEMICAL INDUSTRIES PLC**
**Imperial Chemical House Millbank**
**London SW1P 3JF (GB)**

(72) Inventor: **Frangou, Andrew**
**33 Manor Close Clifton**
**Shefford Bedfordshire (GB)**

(74) Representative: **Sheller, Alan et al**
**Imperial Chemical Industries PLC Legal**
**Department: Patents PO Box 6**
**Welwyn Garden City Herts, AL7 1HD (GB)**

Courier Press, Leamington Spa, England.

## Description

The present invention relates to a process for the homo- or copolymerisation of vinyl chloride in aqueous microsuspension and to the polymers produced by such a process.

It is well known to produce vinyl chloride polymers using a process in which an aqueous dispersion of vinyl chloride, or vinyl chloride and a copolymerisable monomer, in the presence of a surfactant (emulsifying agent and/or suspension agent) and an organo-soluble free-radical forming initiator, is homogenised by subjecting it to a violent shearing action in, e.g. a colloid mill, a high speed pump or an ultrasonic device, and the resulting homogenised dispersion polymerised in a stirred reactor to yield a vinyl chloride polymer latex.

The vinyl chloride polymers produced by such a process are composed of very small particles which can be dispersed in plasticisers to form relatively stable dispersions known as pastes. These are useful in a variety of applications such as shaping processes, e.g. involving open casting, rotational casting, slush moulding, compression and injection moulding, or in coating processes, e.g. by dipping, spraying or spreading techniques or in the manufacture of foams.

The particle size distributions of vinyl chloride polymers made by polymerisation in aqueous microsuspension are such that pastes made with the polymers possess particularly advantageous properties, such as low initial viscosity and a slow rate of increase in viscosity on ageing.

In common with other types of vinyl chloride polymerisation processes employing free-radical yielding initiators, vinyl chloride polymerisation in aqueous microsuspension is likely to incur the problem known as autoacceleration in which the rate of the polymerisation reaction increases sharply towards the end of the polymerisation when most of the monomer has been converted to polymer. The resulting sharp increase in heat output from the reaction must be removed by the cooling system employed for safety reasons and also in order to maintain the reaction temperature reasonably constant to achieve a uniform product. This effect may be clearly observed in reactors having a cooling system comprising a jacket through which water is circulated by monitoring the temperature of the circulating cooling water. During autoacceleration, the cooling water temperature must be markedly decreased corresponding to a demand for increased heat-removing capacity if the polymerisation temperature is to be maintained substantially constant.

The heat-removing capacity of the cooling system of the reactor must therefore be large enough to accommodate any rapid increase in heat output due to autoacceleration and has thus to be significantly larger than would be the case if little or no autoacceleration were likely to occur. This is clearly wasteful in terms of required heat capacity since autoacceleration usually occurs only after the major part of the polymerisation reaction is over, so that the extra capacity is normally only required for a short period of time. Alternatively, a given heat-removing capacity for a particular reactor could be used to its maximum capacity throughout a polymerisation reaction if there were no autoacceleration (i.e. if the kinetics were "square-wave") so that reduced cycle times could be achieved (it would be possible to use more rapid, and hence more exothermic, reactions if the heat-removing capacity did not have to additionally accommodate autoacceleration towards the end of the reaction).

It has been proposed that the problem may be overcome to a certain extent by carrying out the aqueous microsuspension polymerisation in the presence of an initially present seeding product (produced by aqueous microsuspension polymerisation) containing all the initiator necessary for the polymerisation. Such a process is described in British Patent 1 170 963. In British Patent 1 435 425 it is suggested that the effect on reducing autoacceleration by using the process of British Patent 1 170 963 is limited in usefulness. In British Patent 1 435 425 the problem of autoacceleration is said to be effectively overcome by adopting a variant of the process of British Patent 1 170 963 in which the initiator (contained in the seed polymer) is activated with a monomer-soluble metal complex which is progressively introduced pre-formed or progressively produced in-situ throughout the polymerisation process and is formed by reaction between a water-soluble metallic salt and a complexing agent — the complexing agent causing the metal to change from its water-soluble form to a form soluble in vinyl chloride.

I have now discovered that, surprisingly, the above-described technique of overcoming autoacceleration may be readily applied to a conventional unseeded microsuspension polymerisation (provided certain initiators are used) — the initiator being activated with a monomer-soluble metallic complex while in a "free" form, i.e. while not being contained in the particles of a pre-formed seeding product. The vinyl chloride polymer latex from such a polymerisation is entirely satisfactory from the point of view of possessing good latex stability and a small average particle size. Nevertheless, I have found that while some pastes made from polymers prepared by this process possess acceptable viscosity behaviour, others sometimes possess an unacceptable high initial viscosity and/or undergo an unacceptably rapid increase in viscosity on ageing. Additionally, even if pastes made from these polymers do possess acceptable viscosity characteristics, these are somtimes not quite as good as those of pastes made from corresponding polymers prepared in an unactivated microsuspension polymerisation using the same homogenisation equipment. Consequently, although the problem of autoacceleration in microsuspension polymerisation may be overcome by using the same sort of process as described in British Patent 1 435 425 (with certain initiators) but without employing a seeding product to contain the initiator for the polymerisation reaction (as required by the teaching of that patent), another problem can sometimes arise in that the paste-forming polymers produced sometimes either have unacceptably poor viscosity characteristics or have viscosity characteristics that, while acceptable, leave room for some improvement.

I have further discovered that the achievement of acceptable paste viscosity behaviour, including such achievement in the context of the surmounting of the problems (where they arise) of poor or improvable paste viscosity behaviour, is a direct consequence of the appropriate selection of the conditions of the homogenisation step before the commencement of polymerisation.

According to the present invention there is provided a process for the homo- or copolymerisation of vinyl chloride in aqueous microsuspension wherein before the commencement of polymerisation a mixture which contains vinyl chloride or vinyl chloride and a copolymerisable monomer, water, an emulsifying agent and/or suspension agent and an organo-soluble free-radical yielding initiator having a half life at 50°C of $\geqslant$ 10 hours, preferably $\geqslant$ 20 hours, is homogenised and the homogenised vinyl chloride-containing dispersion used in a microsuspension polymerisation to form a latex of a vinyl chloride polymer, wherein the initiator is activated during polymerisation by an organo-soluble metallic complex progressively introduced pre-formed or progressively produced in-situ during the polymerisation so as to maintain a substantially constant polymerisation rate, the organo-soluble metallic complex being formed by reacting a water-soluble metallic salt with a complexing agent that causes the metal to change from its water-soluble form to a form soluble in vinyl chloride, and wherein the conditions of the homogenisation step before polymerisation is started are selected to yield a vinyl chloride polymer latex having a particle size distribution defined by having a width at half height of the differential weight distribution ($v_{1/2}$) within the range 0.50 to 1.80 $\mu$m.

There is further provided according to the invention a vinyl chloride polymer made using a process as defined herein.

(It is to be understood that the process of the invention embraces the microsuspension polymerisation technique described in British Patent 1 458 367 in which only a fraction of the monomer to be polymerised is homogenised in the presence of water, emulsifying agent and/or suspension agent, and initiator, and mixed with the remainder of the monomer to be polymerised, the combined fractions then being polymerised to form the vinyl chloride polymer latex).

In general, it is more convenient for the organo-soluble metallic complex to be produced in-situ during the polymerisation rather than be introduced pre-formed. In-situ formation is preferably effected by having the water-soluble metallic salt initially present in the polymerisation medium and reacting it with the complexing agent which is progressively introduced during the polymerisation. In-situ formation may alternatively be effected by having the complexing agent initially present in the polymerisation medium and progressively introducing the water-soluble metallic salt, or by progressively adding both the complexing agent and the water-soluble metallic salt to the polymerisation medium.

A critical feature of the process of the present invention is that the conditions of homogenisation before polymerisation are selected to yield a vinyl chloride polymer latex of particle size distribution defined by having a width at half height of the differential weight distribution ($v_{1/2}$) within the range 0.50 to 1.80 $\mu$m (the meaning of the parameter $v_{1/2}$ will be explained in detail hereinafter). In a conventional microsuspension polymerisation process, it is common practice to recirculate the material emerging from the homogenising apparatus back to the stock of material being passed to the homogeniser in order to ensure as complete a homogenisation as possible. It has been found that in conventional microsuspension polymerisations, the conditions of homogenisation (e.g. the amount of recirculation) achievable with many homogenisers to provide a normally acceptable degree of homogenisation often yields a vinyl chloride polymer latex of $v_{1/2}$ of the order of (e.g.) 0.50 to 0.80 $\mu$m. When activating the initiator using an organo-soluble metallic complex, however, as in the process of the present invention, the same conditions of homogenisation as normally used in a conventional microsuspension polymerisation using such homogenisers results in a vinyl chloride polymer latex having $v_{1/2}$ within a range of the order of 0.3 $\mu$m to 0.4 $\mu$m, i.e. a dispersion with a much narrower spread of particle size. Such vinyl chloride polymers exhibit very poor, and indeed unacceptable, paste viscosity behaviour as described above. I have found that by selectively adjusting the conditions of homogenisation with such homogenisers, e.g. by, inter alia, reducing the recirculation time and/or by employing a microsuspension technique which involves homogenising only a fraction of the total monomer to be used in the polymerisation (i.e. the technique described in British Patent 1 458 367) and, if necessary, adding only part of the emulsifying agent and/or surfactant to be used in the polymerisation to the monomer fraction which is homogenised, so that the conditions are less severe in comparision to what is conventionally employed for a particular polymerisation set-up, it is possible to provide vinyl chloride polymer latex having $v_{1/2}$ within the range 0.50 $\mu$m to 1.80 $\mu$m and more usually within the range 0.50 $\mu$m to 0.80 $\mu$m; such vinyl chloride polymers then do exhibit acceptable paste viscosity behaviour.

It is also sometimes found that some homogenisers, when operated so as to give an acceptable degree of homogenisation, will yield a vinyl chloride polymer latex made by unactivated microsuspension polymerisation with a very broad spread of particle size, having $v_{1/2}$ of the order of

3

0.90 $\mu$m to 1.80 $\mu$m. When activating the initiator according to the invention, the same conditions of homogenisation as normally used with such homogenisers in an unactivated microsuspension polymerisation may well result in a vinyl chloride polymer latex having $v_{1/2}$ within a range of the order of (say) 0.60 $\mu$m to 0.80 $\mu$m. Such a vinyl chloride polymer will of course exhibit acceptable paste viscosity behaviour (and so of course is within the scope of the present invention), but it might be felt desirable, if possible, to achieve a still broader spread of particle size of the order of that obtained from the unactivated polymerisation; this could further improve the paste viscosity behaviour of the vinyl chloride polymer by matching that of the vinyl chloride polymer obtained from a corresponding unactivated microsuspension polymerisation using the same homogenisation equipment. In such cases, therefore, the conditions may be selected so as to provide a vinyl chloride polymer latex having $v_{1/2}$ in the range 0.90 $\mu$m to 1.80 $\mu$m, preferably 1.0 $\mu$m to 1.50 $\mu$m.

Obviously, the necessary degree of type of adjustment in the homogenisation conditions will vary for any particular polymerisation set-up and should be determined by experiment.

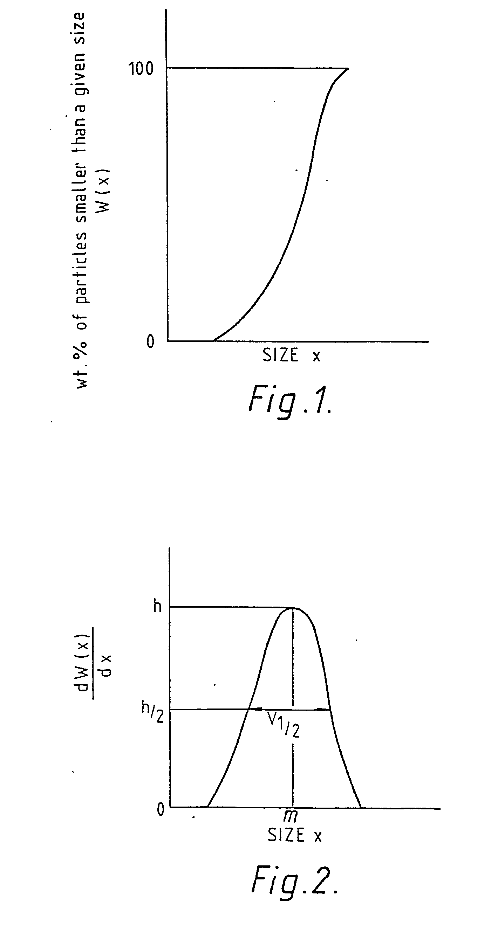

The term $v_{1/2}$ is now explained. The particle size distribution of a vinyl chloride polymer may be expressed as a graph of the weight% of particles smaller than a given size (W (x) — ordinate) versus the particle size (x — abscissa). A typical distribution curve is shown in Figure 1.

The differential

$$\frac{dW(x)}{dx}$$

versus x gives the differential weight distribution curve, e.g. as shown in Figure 2. The parameter $v_{1/2}$ is defined as the width at half the maximum height (h) of the differential weight distribution curve (see Figure 2). The value of x at maximum height is known as the modal diameter (m). If x is measured in units of $\mu$m, $v_{1/2}$ and m will also be expressed in units of $\mu$m.

It is apparent, as described above, that the effect of initiator activation is to significantly lower the value of $v_{1/2}$ in comparison to the value obtained in an unactivated polymerisation using the same homogenisation conditions.

In the process of the present invention, the amount of the organo-soluble free-radical forming initiator used should be sufficiently low such that it will not, under the polymerisation temperature employed, produce a sufficient quantity of polymerisation initiating free-radicals by a purely thermal mechanism which will render control of the polymerisation rate by the organo-soluble metallic complex unattainable. On the other hand, the amount of initiator used should be high enough for it not to be all consumed before the required conversion to polymer has been reached and to provide an acceptable reaction rate when activated during the polymerisation. Thus, the amount of the initiator used, the amount of organo-soluble metallic complex used or formed in-situ and the rate of introduction or in-situ formation of the organo-soluble metallic complex should be selected so as to achieve an acceptably rapid and substantially constant polymerisation reaction rate during the polymerisation. In this way, autoacceleration may be readily avoided in polymerisations with good reaction rates. In practice, the selection of the rate of introduction or in-situ formation of the organo-soluble metallic complex in the achievement of a substantially constant polymerisation rate is normally effected by adjustment of said rate of introduction or in-situ formation so as to maintain the temperature of the cooling water circulating in the reactor cooling jacket substantially constant at a preselected value throughout the polymerisation (the bigger the difference between the cooling water temperature and the polymerisation temperature, the greater is the rate of reaction).

It is also critical in the process of the invention that the initiator employed should be a free-radical yielding initiator capable of reacting with the complex to form free-radicals and which has a half life of $\geqslant$ 10 hours, preferably $\geqslant$ 20 hours, at 50°C. More reactive initiators are not useful in the process of the invention because they will be too rapidly decomposed by thermal means alone. Suitable initiators particularly include 2,4-dichlorobenzoyl peroxide, caprylyl peroxide, lauroyl peroxide, t-butyl peroxyisobutyrate, benzoyl peroxide, p-chlorobenzoyl peroxide, t-butyl peracetate, t-butyl perbenzoate, dicumyl peroxide and di-t-butyl peroxide. Diacyl peroxides such as lauroyl peroxide are particularly preferred.

The metals that may be used for the activating metallic complex include iron, copper, cobalt, nickel, zinc and tin. The water-soluble metal salts that may be used to make the complexes include metallic sulphates, chlorides, nitrates and acetates, preferably in a quantity such that the molar ratio of metallic salt to initiator is from 0.1/1 to 5/1, particularly from 0.1/1 to 3/1. The preferred water-soluble metal salt is cupric sulphate.

The complexing agents used in the present invention are compounds that are capable of causing the metal to change from its water-soluble form to a form soluble in vinyl chloride; they should of course have no inhibiting action on the polymerisation and on the activation of the initiator by the metal. Suitable complexing agents include monocarboxylic acids that are only slightly soluble in water, e.g. octoic acid; polycarboxylic acids, e.g. succinic acid; and lactones e.g. ascorbic acid and its esters. The preferred complexing agent is ascorbic acid.

# O 038 634

In the presence of the water-soluble metallic salt the complexing agent produces an organo-soluble metallic complex so that the metal passes into the organic phase where it activates the initiator. The initiator can thus be activated at will by varying the quantity of organo-soluble metallic complex and the moment when it is introduced into or formed in-situ in the reaction zone; the kinetics of the polymerisation can thus be controlled at all times. In this way, autoacceleration may be avoided and the optimum use of the cooling capacity of the reaction vessel may be achieved, with polymerisation being effected in the minimum time.

Any effective emulsifying agent and/or suspension agent may be used in the process of the invention. The emulsifying agents may be anionic, cationic or non-ionic. We prefer, however, to use anionic amulsifying agents since they are more efficient in stabilising the resulting polymer latex. Examples of anionic agents are the sodium salts of sulphated and sulphonated hydrocarbons and fatty acids such as dioctyl sodium sulphosuccinate, sulphonated diesel oil and sodium lauryl sulphate and the sodium salts of alkyl aryl sulphonates such as sodium dodecyl benzene sulphonate.

Suspension agents which may be used include protective colloids such as cellulose derivatives and partially hydrolysed polyvinyl acetates.

In the process of the invention homogenisation may be effected using any suitable apparatus such as those mentioned hereinbefore. We have found that homogenisation is simply effected and readily controlled by using a high speed pump, e.g. a 2-stage pump gives very good results.

To produce the homogenised dispersion according to the process of the invention a stirred premix of the monomer, water, emulsifier and/or suspension agent and initiator may, e.g., be formed in the premix vessel and the resulting dispersion passed through the homogeniser (after suitable recirculation as necessary), stored in a vessel, and then passed into the reactor.

Polymerisation is usually effected at a temperature of between 40°C and 70°C.

On completion of the polymerisation, the polymer may be separated from the water by any suitable drying technique, such as tray drying, drum drying or more particularly spray drying.

The present invention is illustrated by the following Examples. All percentages and parts are by weight (unless otherwise specified).

## Example 1 (Comparative)

A course dispersion containing the following materials was prepared in a stirred vessel:

| | |
|---|---|
| demineralised water | — 50 kg |
| vinyl chloride | — 40 kg |
| sodium dodecyl benzene sulphonate (emulsifying agent) | — 0.3 kg (0.75% of the total weight of vinyl chloride used in the polymerisation) |
| lauroyl peroxide | — 50 g |
| cupric sulphate pentahydrate | — 3 g |

The coarse dispersion was passed through a 2-stage high speed pump homogeniser (pressure of first stage 2000 psi or 13790 kN/m$^2$, pressure of second stage 500 psi or 3447.5 kN/m$^2$), a recirculation of approximately 10 minutes being employed. The homogenised mixture was passed to a reactor vessel of capacity 160 litres, having a jacket for taking circulating cooling water.

The stirred reaction medium was heated at 50°C (polymerisation temperature) and an aqueous solution of ascorbic acid (containing 0.7 g/l) was added so as to maintain the temperature of the jacket cooling water at approximately 4—6°C below the polymerisation temperature (it could be seen that when the jacket temperature begun to rise, further addition of ascorbic acid solution caused it to decrease again — indicating that the initiator decomposition was being activated by the organometallic complex being formed in-situ between the cupric sulphate and the ascorbic acid to cause polymerisation). A steady reaction rate was maintained throughout polymerisation, the reaction being terminated when the pressure inside the reactor had reached approximately 2/3 running pressure (after approximately 4.75 hours polymerisation time). The total amount of ascorbic acid solution used was approximately 7 litres.

Values of $v_{1/2}$ and m for the latex were measured for the resulting latex using a Joyce Loebl Disc Photosedimentometer and were found to be 0.30 $\mu$m and 0.41 $\mu$m respectively.

The latex was dried by spray drying. 100 parts of the dried polymer were mixed with 60 parts of dialkyl (C 14—16) phthalate to form a paste having the following viscosity characteristics:

5

| initial viscosity | — 33 poise (3.3 Ns/m$^2$); |
|---|---|
| viscosity after 7 days storage | — too thick to measure. |

### Example 2 (Comparative)

Example 1 was repeated except that the pressure of the first stage of the homogeniser was 1600 psi (11032 kN/m$^2$) instead of 2000 psi (13790 kN/m$^2$) as in Example 1 — the polymerisation conditions otherwise being the same.

The values of $v_{1/2}$ and m for the latex were 0.32 $\mu$m and 0.42 $\mu$m respectively. The paste viscosity characteristics of the polymer were:

| initial viscosity | — 46 poise (4.6 Ns/m$^2$); |
|---|---|
| viscosity after 7 days storage | — too thick to measure. |

### Example 3 (Comparative)

Example 2 was repeated. The values of $v_{1/2}$ and m for the latex were 0.35 $\mu$m and 0.48 $\mu$m respectively. The paste viscosity characteristics of the polymer were:

| initial viscosity | — 24 poise (2.4 Ns/m$^2$); |
|---|---|
| viscosity after 7 days storage | — too thick to measure. |

### Example 4 (Comparative)

Example 1 was repeated except that in place of the activated lauroyl peroxide system there was used only a mixture of 80 g lauroyl peroxide and 20 g dicetyl peroxydicarbonate (included with the homogenised charge), i.e. no cupric sulphate and ascorbic acid being employed, this initiator mixture (being decomposed during polymerisation into free-radicals by thermal means only) being employed in order to achieve a reasonably fast reaction time. In fact, the time to 2/3 running pressure (when the reaction was terminated) was 9.0 hours, and towards the end of the reaction the temperature of the cooling water dropped sharply to about 12°C below the polymerisation temperature in order to maintain the polymerisation temperature steady at 50°C — indicating that a significant autoacceleration had been incurred.

The values of $v_{1/2}$ and m for the latex were 0.61 $\mu$m and 0.50 $\mu$m respectively. The paste viscosity characteristics of the polymer were:

| initial viscosity | — 22 poise (2.2 Ns/m$^2$); |
|---|---|
| viscosity after 7 days storage | — 55 poise (5.5 Ns/m$^2$); |

### Example 5

Example 1 was repeated except that a recirculation time of only 1 minute was employed during homogenisation (instead of 10 minutes as in Example 1).

The values of $v_{1/2}$ and m for the resulting latex were 0.63 $\mu$m and 0.64 $\mu$m respectively. The paste viscosity characteristics of the polymer were:

| initial viscosity | — 21 poise (2.1 Ns/m$^2$); |
|---|---|
| viscosity after 7 days storage | — 71 poise (7.1 Ns/m$^2$); |

### Example 6

Example 5 was repeated.

The values of $v_{1/2}$ and m for the resulting latex were 0.57 $\mu$m and 0.62 $\mu$m respectively. The paste viscosity characteristics of the polymer were:

| initial viscosity | — 26 poise (2.6 Ns/m$^2$); |
|---|---|
| viscosity after 7 days storage | — 77 poise (7.7 Ns/m$^2$); |

### Example 7

Example 5 was repeated except that the pressure of the first stage of the homogeniser was 1600 psi (11032 kN/m$^2$) instead of 2000 psi (13790 kN/m$^2$) as in Example 5.

The values of $v_{1/2}$ and m for the resulting latex were 0.74 $\mu$m and 0.77 $\mu$m respectively. The paste viscosity characteristics of the polymer were:

initial viscosity — 22 poise (2.2 Ns/m²);

viscosity after 7 days storage — 51 poise (5.1 Ns/m²);

Example 8 (Comparative)

Example 4 was repeated. Again, a long polymerisation time incurring autoacceleration was observed.

The values of $v_{1/2}$ and m for the resulting latex were 0.65 $\mu$m and 0.53 $\mu$m respectively. The paste viscosity characteristics of the polymer were:

initial viscosity — 17 poise (1.7 Ns/m²);

viscosity after 7 days storage — 45 poise (4.5 Ns/m²);

The reaction conditions and results of the polymerisation processes of Examples 1—8, of which Examples 5, 6 and 7 are in accordance with the present invention, are summarised in the following Table 1.

7

TABLE 1

| Ex. No. | Whether initiator activated | Polymer- isation time (hr) | Recircu- lation time (min) | 1st stage Homogeniser pressure $kN/m^2$ | Whether auto- acceleration occurred | $v_{\frac{1}{2}}$ ($\mu m$) | m ($\mu m$) | Paste viscosity # $Ns/m^2$ | |
|---|---|---|---|---|---|---|---|---|---|
| | | | | | | | | Initially | After 7 days |
| 1 | Yes | 4.75 | 10 | 13790 | No | 0.30 | 0.41 | 3.3 | TTTM* |
| 2 | Yes | 5.5 | 10 | 11032 | No | 0.32 | 0.42 | 4.6 | TTTM* |
| 3 | Yes | 5.5 | 10 | 11032 | No | 0.35 | 0.48 | 2.4 | TTTM* |
| 4 | No | 9.0 | 10 | 13790 | Yes | 0.61 | 0.50 | 2.2 | 5.5 |
| 5 | Yes | 5.25 | 1 | 13790 | No | 0.63 | 0.64 | 2.1 | 7.1 |
| 6 | Yes | 5.5 | 1 | 13790 | No | 0.57 | 0.62 | 2.6 | 7.7 |
| 7 | Yes | 5.5 | 1 | 11032 | No | 0.74 | 0.77 | 2.2 | 5.1 |
| 8 | No | 9.25 | 10 | 13790 | Yes | 0.65 | 0.53 | 1.7 | 4.5 |

TTTM* = too thick to measure
# = at 133 $s^{-1}$ using a Ferranti-Shirley Viscometer

It can be seen that the crucial feature when using an activated initiator system is to select the homogenisation conditions (in this case by adjusting them by reducing recirculation time) so as to obtain a latex having $v_{1/2}$ within the range 0.50 to 1.80 $\mu$m. While the homogenisation conditions used in Examples 4 and 8 yielded products in unactivated (and autoaccelerated) polymerisations having $v_{1/2}$'s of 0.61 $\mu$m and 0.65 $\mu$m and possessing acceptable paste viscosity characteristics, the use of the same homogenisation conditions in the non-autoaccelerated activated polymerisation of Example 1 yielded a product ($v_{1/2}$ 0.30) with unacceptable paste viscosity characteristics. Reducing the extent of homogenisation by lowering the homogenisation pressure from 2000 psi (13790 kN/m$^2$) to 1600 psi (11032 kN/m$^2$) (Examples 2 and 3) was insufficient to solve the problem of poor paste viscosity characteristics since values of $v_{1/2}$ of only 0.32 $\mu$m and 0.35 $\mu$m were obtained. Only by significantly reducing the recirculation time (from 10 minutes to 1 minute — Examples 5 and 6) optionally together with a reduction in the homogenisation pressure (Example 7) so as to obtain $v_{1/2}$'s within the range 0.50 to 1.80 $\mu$m (and more particularly in the range 0.50 to 0.80 $\mu$m when employing the particular homogeniser used in these Examples) in activated polymerisations (Examples 5, 6 and 7) were non-autoaccelerated polymerisations obtained which yielded polymers of acceptable paste viscosity characteristics.

### Example 9 (Comparative)

The microsuspension polymerisation technique employed in this Example was that described in British Patent 1 458 367.

A coarse dispersion containing the following materials was prepared in a stirred vessel:

| | |
|---|---|
| demineralised water | — 15.95 kg |
| vinyl chloride | — 10 kg |
| sodium dodecyl benzene sulphonate (emulsifying agent) | — 0.3 kg (0.75% of the total weight of vinyl chloride used in the polymerisation) |
| lauroyl peroxide | — 80 g |
| dicetyl peroxydicarbonate | — 20 g |

The coarse dispersion was passed through a 2-stage high speed pump homogeniser (pressure of first stage 2000 psi or 13790 kN/m$^2$, pressure of second stage 500 psi or 3447.5 kN/m$^2$), a recirculation time of 1 minute being employed. The homogenised mixture was passed to a reactor vessel of capacity 160 litres, having a jacket for taking circulating cooling water, and already containing unhomogenised vinyl chloride (30 kg) and demineralised water (35.25 kg).

The stirred reaction medium was heated to 50°C (polymerisation temperature). The time to 2/3 running pressure (when the reaction was terminated) was 9.0 hours, and towards the end of the reaction the temperature of the cooling water dropped sharply to about 15—16°C below the polymerisation temperature in order to maintain the polymerisation temperature steady at 50°C — indicating that a significant autoacceleration had been incurred.

The values of $v_{1/2}$ and m for the latex were 0.54 $\mu$m and 0.69 $\mu$m respectively. The paste viscosity characteristics of the polymer (determined as per Example 1) were:

| | |
|---|---|
| initial viscosity | — 17 poise (1.7 Ns/m$^2$); |
| viscosity after 7 days storage | — 39 poise (3.9 Ns/m$^2$); |

### Example 10 (Comparative)

The microsuspension polymerisation technique employed in this Example was again that described in British Patent 1 458 367, but the coarse dispersion prepared in a stirred vessel contained the following materials:

| | |
|---|---|
| demineralised water | — 15.95 kg |
| vinyl chloride | — 10 kg |
| sodium dodecyl benzene sulphonate (emulsifying agent | — 0.3 kg (0.75% of the total weight of vinyl chloride used in the polymerisation) |

9

| lauroyl peroxide | — 50 g |
|---|---|
| cupric sulphate pentahydrate | — 3 g |

As in Example 1, the coarse dispersion was passed through a 2-stage high speed pump homogeniser (pressure of first stage 2000 psi or 13790 kN/m$^2$, pressure of second stage 500 psi or 3447.5 kN/m$^2$), a recirculation time of 1 minute being employed. The homogenised mixture was passed to the reactor vessel (as used in Example 9) which already contained unhomogenised vinyl chloride (30 kg) and demineralised water (35.25 kg).

The stirred reaction medium was heated to 50°C (polymerisation temperature) and an aqueous solution of ascorbic acid (containing 0.7 g/l) was added so as to maintain the temperature of the jacket cooling water at approximately 4—6°C below the polymerisation temperature (as described in Example 1). A steady reaction rate was maintained throughout polymerisation, the reaction being terminated when the pressure in the reactor had reached about 2/3 running pressure (after approximately 6.0 hours polymerisation time). The total amount of ascorbic acid solution used was approximately 7.7 litres.

The values of $v_{1/2}$ and m for the latex were 0.40 $\mu$m and 0.50 $\mu$m respectively. The paste viscosity characteristics of the polymer were:

| initial viscosity | — 42 poise (4.2 Ns/m$^2$); |
|---|---|
| viscosity after 7 days storage | — too thick to measure. |

## Example 11

Example 10 was repeated except that the mixture of materials homogenised contained only 37.5 g of sodium dodecyl benzene sulphonate (0.09% by weight of the total weight of vinyl chloride used in the polymerisation), instead of 0.3 kg as in Example 10, while the reactor already containing unhomogenised vinyl chloride (30 kg) and demineralised water (35.25 kg) also contained 262.5 g of sodium dodecyl benzene sulphonate (0.66% by weight of the total weight of vinyl chloride used in the polymerisation).

The values of $v_{1/2}$ and m for latex were 0.64 $\mu$m and 0.84 $\mu$m respectively. The paste viscosity characteristics of the polymer were:

| initial viscosity | — 20 poise (2.0 Ns/m$^2$); |
|---|---|
| viscosity after 7 days storage | — 42 poise (4.2 Ns/m$^2$); |

The reaction conditions and results of Examples 9—11, of which Example 11 is in accordance with the invention are summarised in the following Table 2.

TABLE 2

| Ex. No. | Whether initiator activated | Polymer-isation time (hr) | Recircu-lation time (min) | % Emulsifier in homogenised mixture (on total vinyl chloride in polymerisation) | Whether auto-acceleration occurred | $v\frac{1}{2}$ ($\mu$m) | m ($\mu$m) | Paste viscosity ≠ Ns/m² | |
|---|---|---|---|---|---|---|---|---|---|
| | | | | | | | | Initially | After 7 days |
| 9 | No | 9.0 | 1 | 0.75% | Yes | 0.54 | 0.69 | 1.7 | 3.9 |
| 10 | Yes | 6.0 | 1 | 0.75% | No | 0.40 | 0.50 | 4.2 | TTTM* |
| 11 | Yes | 6.0 | 1 | 0.09% | No | 0.64 | 0.84 | 2.0 | 4.2 |

TTTM* = too thick to measure
≠ = at 133 s$^{-1}$ using a Ferranti-Shirley Viscometer

It can be seen that the unactivated (and autoaccelerated) polymerisation of Example 9 yielded a product of $v_{1/2}$ 0.54 $\mu$m possessing acceptable paste viscosity behaviour. Note that a recirculation time of only 1 minute was adequate to obtain an acceptable degree of homogenisation; this was because only a small part of the polymerisation charge was actually subjected to homogenisation (using the microsuspension polymerisation technique of British Patent 1 458 367) — accordingly there is little scope in this arrangement for adjusting the homogenisation conditions merely by reducing recirculation time. Example 10 used the same basic polymerisation technique as Example 9 (i.e. that of British Patent 1 458 367) but differed by employing initiator activation; however the product had $v_{1/2}$ of only 0.40 $\mu$m and possesed unacceptable paste viscosity behaviour, showing that in this particular arrangement, the adjustment of the homogenisation conditions simply by homogenising less of the monomer which is to be polymerised is not in itself sufficient to yield a polymer latex according to the invention having $v_{1/2}$ within the range 0.50 $\mu$m to 1.80 $\mu$m. Example 11 was essentially a repeat of Example 10, but differed from it by incorporating much less of the emulsifying agent to be used for the polymerisation in the mixture subjected to homogenisation; selection of the homogenisation conditions in this manner for this particular arrangement did therefore yield a polymer latex according to the invention — having $v_{1/2}$ of 0.64 $\mu$m and possessing acceptable paste viscosity behaviour.

**Claims**

1. A process for the homo- or copolymerisation of vinyl chloride in aqueous microsuspension wherein before the commencement of polymerisation a mixture which contains vinyl chloride or vinyl chloride and a copolymerisable monomer, water, an emulsifying agent and/or suspension agent and an organo-soluble free-radical yielding initiator having a half life at 50°C of $\geqslant$ 10 hours is homogenised and the homogenised vinyl chloride-containing dispersion used in a microsuspension polymerisation to form a latex of a vinyl chloride polymer, wherein the initiator is activated during polymerisation by an organo-soluble metallic complex progressively introduced pre-formed or progressively produced in-situ during the polymerisation so as to maintain a substantially constant polymerisation rate, the organo-soluble metallic complex being formed by reacting a water-soluble metallic salt with a complexing agent that causes the metal to change from its water-soluble form to a form soluble in vinyl chloride, and wherein the conditions of the homogenisation step before polymerisation is started are selected to yield a vinyl chloride polymer latex having a particle size distribution defined by having a width at half height of the differential weight distribution ($v_{1/2}$) within the range 0.50 $\mu$m to 1.80 $\mu$m.

2. A process according to claim 1 wherein the conditions of the homogenisation step are selected to yield a vinyl chloride polymer latex having a particle size distribution defined by having $v_{1/2}$ within the range 0.50 $\mu$m to 0.80 $\mu$m.

3. A process according to claim 1 wherein the conditions of the homogenisation step are selected to yield a vinyl chloride polymer latex having a particle size distribution defined by having $v_{1/2}$ within the range 0.90 $\mu$m to 1.80 $\mu$m.

4. A process according to claim 3 wherein the conditions of the homogenisation step are selected to yield a vinyl chloride polymer latex having a particle size distribution defined by having $v_{1/2}$ within the range 1.0 $\mu$m to 1.50 $\mu$m.

5. A process according to either claim 1 or claim 2 wherein the selection of the conditions of the homogenisation step to yield said vinyl chloride polymer latex is achieved by at least the choice of the recirculation time.

6. A process according to any one of claims 1 to 4 wherein the selection of the conditions of the homogenisation step to yield said vinyl chloride polymer is achieved at least by the use of a microsuspension polymerisation process in which only a fraction of the total monomer to be used in the polymerisation is homogenised and if necessary only part of the emulsifying agent and/or surfactant to be used in the polymerisation is added to the monomer fraction which is homogenised.

7. A process according to any one of the preceding claims wherein the organo-soluble metallic complex is progressively produced in-situ by having the water-soluble metallic·salt initially present in the polymerisation medium and reacting it with the complexing agent which is introduced progressively during the polymerisation.

8. A process according to any one of the preceding claims wherein the initiator used has a half life at 50°C of $\geqslant$ 20 hours.

9. A process according to claim 8 wherein the initator used is a diacyl peroxide.

10. A process according to claim 9 wherein the initiator used is lauroyl peroxide.

11. A process according to any one of the preceding claims wherein the metal of the activating organo-soluble metallic complex is selected from iron, copper, cobalt, nickel, zinc and tin.

12. A process according to any one of the preceding claims wherein the water-soluble metallic salt used to produce the activating organo-soluble metallic complex is selected from metallic sulphates, chlorides, nitrates and acetates.

13. A process according to claim 12 wherein the water-soluble metallic salt used is cupric sulphate.

14. A process according to any one of the preceding claims wherein the complexing agent used is a monocarboxylic acid, a polycarboxylic acid, or a lactone.

15. A process according to claim 14 wherein the complexing agent used is ascorbic acid.

**Patentansprüche**

1. Verfahren zur Homo- oder Copolymerisation von Vinylchlorid in wäßriger Mikrosuspension, bei dem eine Mischung, die Vinylchlorid oder Vinylchlorid und ein copolymerisierbares Monomer, Wasser, ein Emulgiermittel und/oder Suspendiermittel und einen in organischen Lösungsmitteln löslichen, freie Radikale bildenden Initiator, der bei 50°C eine Halbwertszeit von $\geqslant$ 10 h hat, enthält, vor der Einleitung der Polymerisation homogenisiert wird und die homogenisierte, vinylchloridhaltige Dispersion bei einer Mikrosuspensionspolymerisation zur Bildung eines Vinylchloridpolymer-Latex verwendet wird, bei dem der Initiator während der Polymerisation durch einen in organischen Lösungsmitteln löslichen Metallkomplex, der fortlaufend in vorgebildeter Form eingeleitet oder während der Polymerisation fortlaufend in situ gebildet wird, aktiviert wird, um eine im wesentlichen konstante Polymerisationsgeschwindigkeit aufrechtzuerhalten, wobei der in organischen Lösungsmitteln lösliche Metallkomplex durch Umsetzung eines wasserlöslichen Metallsalzes mit einem Komplexbildner, der den Übergang des Metalls von seiner wasserlöslichen Form in eine in Vinylchlorid lösliche Form veranlaßt, gebildet wird, und bei dem die Bedingungen des vor der Einleitung der Polymerisation durchgeführten Homogenisierungsschrittes so gewählt werden, daß ein Vinylchloridpolymer-Latex mit einer Teilchengrößenverteilung erhalten wird, die dadurch definiert ist, daß $v_{1/2}$, die Breite der differentialen Gewichtsverteilungskurve bei dem halben Wert ihrer größten Höhe, innerhalb des Bereichs von 0,50 $\mu$m bis 1,80 $\mu$m liegt.

2. Verfahren nach Anspruch 1, bei dem die Bedingungen des Homogenisierungsschrittes so gewählt werden, daß ein Vinylchloridpolymer-Latex mit einer Teilchengrößenverteilung erhalten wird, die dadurch definiert ist, daß $v_{1/2}$ innerhalb des Bereichs von 0,50 $\mu$m bis 0,80 $\mu$m liegt.

3. Verfahren nach Anspruch 1, bei dem die Bedingungen des Homogenisierungsschrittes so gewählt werden, daß ein Vinylchloridpolymer-Latex mit einer Teilchengrößenverteilung erhalten wird, die dadurch definiert ist, daß $v_{1/2}$ innerhalb des Bereichs von 0,90 $\mu$m bis 1,80 $\mu$m liegt.

4. Verfahren nach Anspruch 3, bei dem die Bedingungen des Homogenisierungsschrittes so gewählt werden, daß ein Vinylchloridpolymer-Latex mit einer Teilchengrößenverteilung erhalten wird, die dadurch definiert ist, daß $v_{1/2}$ innerhalb des Bereichs von 1,0 $\mu$m bis 1,50 $\mu$m liegt.

5. Verfahren nach Anspruch 1 oder 2, bei dem die Auswahl der Bedingungen des Homogenisierungsschrittes für die Erzielung des erwähnten Vinylchloridpolymer-Latex mindestens durch die Wahl der Rezirkulationszeit erreicht wird.

6. Verfahren nach einem der Ansprüche 1 bis 4, bei dem die Auswahl der Bedingungen des Homogenisierungsschritts für die Erzielung des erwähnten Vinylchloridpolymer-Latex mindestens durch die Anwendung eines Mikrosuspensionspolymerisationsverfahrens erreicht wird, bei dem nur ein Bruchteil des gesamten Monomers, das bei der Polymerisation einzusetzen ist, homogenisiert wird und nötigenfalls nur ein Teil des Emulgiermittels und/oder Suspendiermittels, das bei der Polymerisation einzusetzen ist, zu dem Monomerbruchteil, der homogenisiert wird, gegeben wird.

7. Verfahren nach einem der vorhergehenden Ansprüche, bei dem der in organischen Lösungsmitteln lösliche Metallkomplex dadurch fortlaufend in situ gebildet wird, daß das wasserlösliche Metallsalz anfänglich in dem Polymerisationsmedium vorhanden sein gelassen wird und mit dem Komplexbildner, der während der Polymerisation fortlaufend eingeleitet wird, umgesetzt wird.

8. Verfahren nach einem der vorhergehenden Ansprüche, bei dem der verwendete Initiator bei 50°C eine Halbwertszeit von $\geqslant$ 20 h hat.

9. Verfahren nach Anspruch 8, bei dem der verwendete Initiator ein Diacylperoxid ist.

10. Verfahren nach Anspruch 9, bei dem der verwendete Initiator Lauroylperoxid ist.

11. Verfahren nach einem der vorhergehenden Ansprüche, bei dem das Metall des aktivierenden, in organischen Lösungsmitteln löslichen Metallkomplexes aus Eisen, Kupfer, Kobalt, Nickel, Zink und Zinn ausgewählt ist.

12. Verfahren nach einem der vorhergehenden Ansprüche, bei dem das wasserlösliche Metallsalz, das zur Bildung des aktivierenden, in organischen Lösungsmitteln löslichen Metallkomplexes verwendet wird, aus Metallsulfaten, -chloriden, -nitraten und -acetaten ausgewählt ist.

13. Verfahren nach Anspruch 12, bei dem das verwendete wasserlösliche Metallsalz Kupfer(II)-sulfat ist.

14. Verfahren nach einem der vorhergehenden Ansprüche, bei dem der verwendete Komplexbildner eine Monocarbonsäure, eine Polycarbonsäure oder ein Lacton ist.

15. Verfahren nach Anspruch 14, bei dem der verwendete Komplexbildner Ascorbinsäure ist.

**Revendications**

1. procédé pour l'homopolymérisation ou la copolymérisation de chlorure de vinyle en microsuspension aqueuse selon lequel, avant le début de la polymérisation, on homogénéise un mélange qui contient du chlorure de vinyle ou du chlorure de vinyle et un monomère copolymérisable, de l'eau, un

13

agent émulsionnant et/ou un agent de mise en suspension et un amorceur cédant des radicaux libres organo-soluble ayant une période ou demi-vie à 50°C supérieure ou égale à 10 heures, et on utilise la dispersion homogénéisée contenant le chlorure de vinyle dans une polymérisation en microsuspension, pour former un latex d'un polymère de chlorure de vinyle, suivant lequel on active l'amorceur pendant la polymérisation au moyen d'un complexe métallique organo-soluble introduit progressivement à l'état pré-formé ou bien produit progressivement in situ pendant la polymérisation, de manière à maintenir une vitesse de polymérisation sensiblement constante, le complexe métallique organo-soluble étant formé par réaction d'un sel métallique soluble dans l'eau avec un agent de formation d'un complexe qui provoque une modification du métal pour passer de sa forme soluble dans l'eau à une forme soluble dans le chlorure de vinyle, et suivant lequel les conditions du stade d'homogénéisation avant le début de la polymérisation sont choisies pour donner un latex de polymère de chlorure de vinyle ayant une distribution granulométrique définie par une largeur à mi-hauteur de la courbe de distribution de poids différentielle ($v_{1/2}$) comprise dans une gamme allant de 0,50 $\mu$m à 1,80 $\mu$m.

2. Procédé suivant la revendication 1, caractérisé en ce que les conditions du stade d'homogénéisation sont choisies de façon à donner un latex de polymère de chlorure de vinyle ayant une distribution granulométrique définie par le fait que $v_{1/2}$ est compris dans une gamme allant de 0,50 $\mu$m à 0,80 $\mu$m.

3. Procédé suivant la revendication 1, caractérisé en ce que les conditions du stade d'homogénéisation sont choisies de manière à donner un latex de polymère de chlorure de vinyle ayant une distribution granulométrique définie par le fait que $v_{1/2}$ est compris dans une gamme allant de 0,90 $\mu$m à 1,80 $\mu$m.

4. Procédé suivant la revendication 3, caractérisé en ce que les conditions du stade d'homogénéisation sont choisies pour donner un latex de polymère de chlorure de vinyle ayant une distribution granulométrique définie par le fait que $v_{1/2}$ est compris dans une gamme allant de 1,0 $\mu$m à 1,50 $\mu$m.

5. Procédé suivant la revendication 1 ou 2, caractérisé en ce que le choix des conditions du stade d'homogénéisation pour donner ce latex de polymère de chlorure de vinyle est assuré par au moins le choix du temps de recirculation.

6. Procédé suivant l'une quelconque des revendications 1 à 4, caractérisé en ce que le choix des conditions du stade d'homogénéisation pour donner ce polymère de chlorure de vinyle est obtenu au moins par l'utilisation d'un processus de polymérisation en microsuspension dans lequel une fraction seulement du monomère total devant être utilisé pour la polymérisation est homogénéisée, et si nécessaire une partie seulement de l'agent émulsionnant et/ou de l'agent tensio-actif devant être utilisés au cours de la polymérisation est ajoutée à la fraction de monomère qui est homogénéisée.

7. Procédé suivant l'une quelconque des revendications précédentes, caractérisé en ce que le complexe métallique organo-soluble est produit progressivement in situ par le fait que le sel métallique soluble dans l'eau est initialement présent dans le milieu de polymérisation et qu'on le fait réagir avec l'agent de formation d'un complexe qui est introduit progressivement pendant la polymérisation.

8. Procédé suivant l'une quelconque des revendications précédentes, caractérisé en ce que l'amorceur utilisé a une période ou demi-vie à 50°C égale ou supérieure à 20 heures.

9. Procédé suivant la revendication 8, caractérisé en ce que l'amorceur utilisé est un peroxyde de diacyle.

10. Procédé suivant la revendication 9, caractérisé en ce que l'amorceur utilisé est du peroxyde de lauroyle.

11. Procédé suivant l'une quelconque des revendications précédentes, caractérisé en ce que le métal du complexe métallique organo-soluble d'activation est choisi parmi le fer, le cuivre, le cobalt, le nickel, le zinc et l'étain.

12. Procédé suivant l'une quelconque des revendications précédentes, caractérisé en ce que le sel métallique soluble dans l'eau utilisé pour produire le complexe métallique organo-soluble d'activation est choisi parmi les sulfates, chlorures, nitrates, et acétates métalliques.

13. Procédé suivant la revendication 12, caractérisé en ce que le sel métallique soluble dans l'eau utilisé est du sulfate cuprique.

14. Procédé suivant l'une quelconque des revendications précédentes, caractérisé en ce que l'agent de formation d'un complexe utilisé est un acide monocarboxylique, un acide polycarboxylique ou une lactone.

15. Procédé suivant la revendication 14, caractérisé en ce que l'agent de formation d'un complexe utilisé est de l'acide ascorbique.

Fig.1.

Fig.2.